(19)

Europäisches
Patentamt
European
Patent Office
Office européen
des brevets

(11) **EP 2 899 877 A2**

(12) **EUROPEAN PATENT APPLICATION**

(43) Date of publication:
**29.07.2015 Bulletin 2015/31**

(51) Int Cl.:
*H02P 25/08* (2006.01)

(21) Application number: **15152216.6**

(22) Date of filing: **22.01.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **23.01.2014 GB 201401162** | (71) Applicant: **Nidec SR Drives Ltd.**<br>**Harrogate**<br>**North Yorkshire HG3 1PR (GB)**<br><br>(72) Inventor: **Jordison, Ian**<br>**Harrogate, HG2 9BE (GB)**<br><br>(74) Representative: **Korenberg, Alexander Tal**<br>**Kilburn & Strode LLP**<br>**20 Red Lion Street**<br>**London WC1R 4PJ (GB)** |

(54) **Control of electrical machines**

(57)     An electrical drive system includes an electrical machine whose windings are supplied through solid state switches under the control of a programmable controller. At least two switches act in parallel to provide the current necessary to energise the machine. An apparatus and method are disclosed which enable the controller to monitor the current sharing of the switches and adjust the output of the drive system in the event of any maloperation.

Fig 5

EP 2 899 877 A2

**Description**

The present invention generally relates to an apparatus and method for controlling an electrical machine. More particularly, the present invention relates to the control of an electrical machine which is supplied by a plurality of converters which supply excitation for the windings of the machine.

One example of an electrical machine is the switched reluctance machine. A general treatment of electrical drives which incorporate switched reluctance machines can be found in various textbooks, e.g. "Electronic Control of Switched Reluctance Machines" by TJE Miller, Newnes, 2001, incorporated herein by reference. More detail is provided in the paper "The characteristics, design and application of switched reluctance motors and drives" by Stephenson and Blake, PCIM'93, Nürnberg, 21-24 June 1993, incorporated herein by reference.

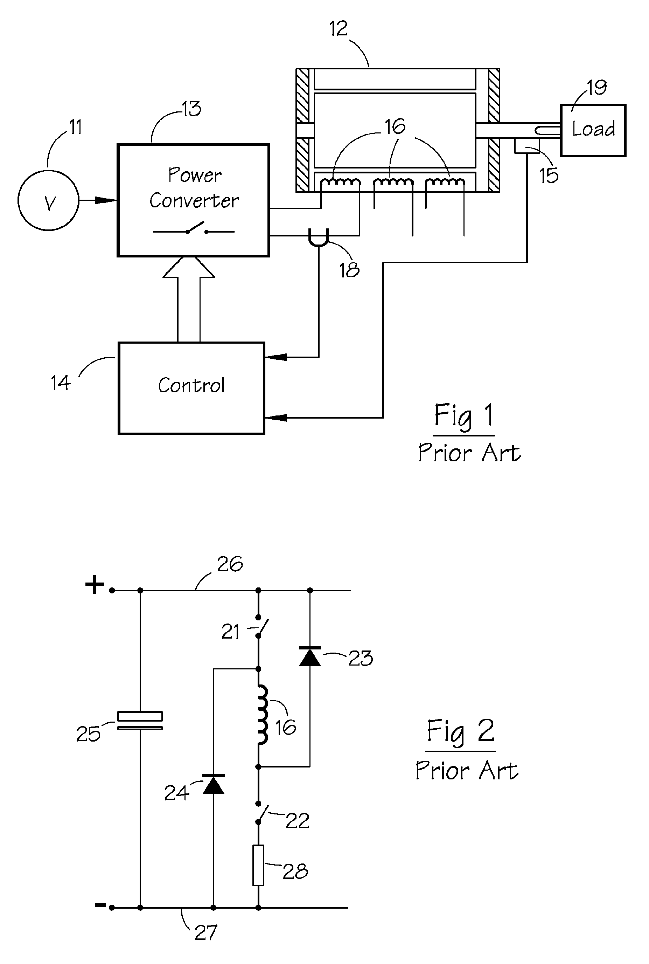

Figure 1 of the accompanying drawings shows a typical switched reluctance drive in schematic form, where the switched reluctance machine 12 is connected to a load 19. The DC power supply 11 can be either a battery, rectified and filtered AC mains or some other form of energy storage. The DC voltage provided by the power supply 11 is switched across the phase windings 16 of the machine 12 by a power converter 13 under the control of the electronic control unit 14. Since knowledge of phase current is generally required, one current transducer is typically used to monitor each phase winding, as schematically shown at 18 in Figure 1. The switching must be correctly synchronised to the angle of rotation of the rotor for proper operation of the drive, and a rotor position detector 15 is typically employed to supply signals corresponding to the angular position of the rotor. The rotor position detector 15 may take many forms, including that of a software algorithm, and its output may also be used to generate a speed feedback signal. The presence of the position detector and the use of an excitation strategy which is completely dependent on the instantaneous position of the rotor leads to the generic description of "rotor position switched" for these machines.

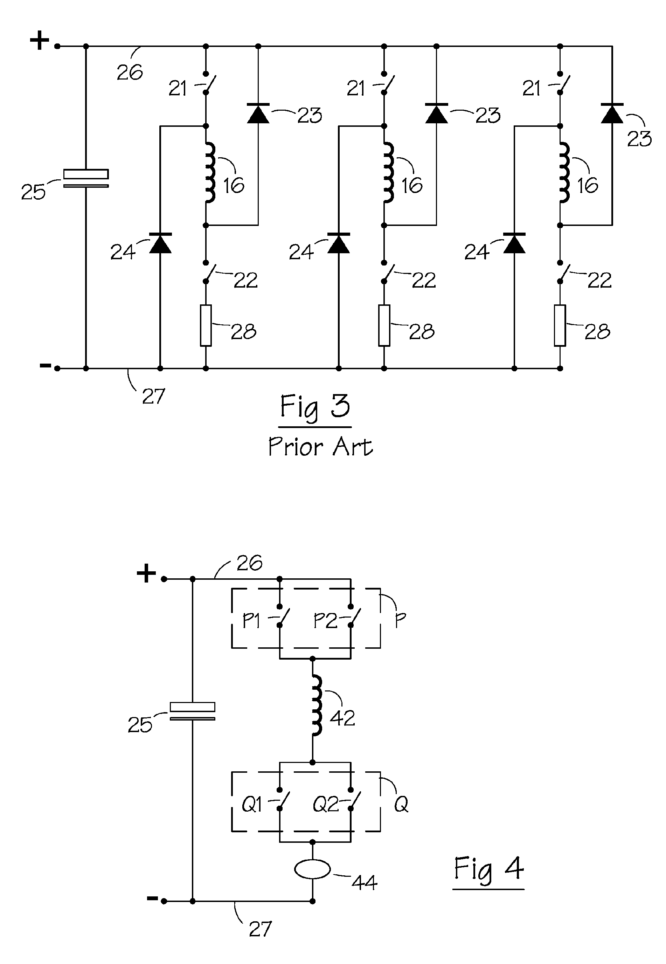

Many different power converter topologies are known for this type of machine, several of which are discussed in the Stephenson paper cited above. One of the most common configurations is shown for a single phase of a polyphase system in Figure 2, in which the phase winding 16 of the machine is connected in series with two switching devices 21 and 22 across the busbars 26 and 27. Busbars 26 and 27 are collectively known as the "DC link" of the converter. Energy recovery diodes 23 and 24 are connected to the winding to allow the winding current to flow back to the DC link when the switches 21 and 22 are opened. A low-value resistor 28 may be connected in series with the lower switch to act as a non-isolated, current-sense resistor. This is an alternative arrangement to the isolated current transducer 18 shown in Figure 1. Polyphase systems typically use the appropriate number of the phase legs of Figure 2 connected in parallel to supply the complete system, as shown in Figure 3 for a 3-phase system.

A capacitor 25, known as the "DC link capacitor", is connected across the DC link to source or sink any alternating component of the DC link current (ie the so-called "ripple current") which cannot be drawn from, or returned to, the supply. In practical terms, the capacitor 25 may comprise several capacitors connected in series and/or parallel and, where parallel connection is used, some of the elements may be distributed throughout the converter.

At the end of the conduction period, the "off angle" ($\theta_{off}$) is reached, the switches are opened and the current transfers to the diodes, placing the inverted link voltage across the winding and hence forcing down the flux and the current to zero. At zero current, the diodes cease to conduct and the circuit is inactive until the start of a subsequent conduction period. The current on the DC link reverses when the switches are opened and the returned current represents energy being returned to the supply. The shape of the current waveform varies depending on the operating point of the machine and on the switching strategy adopted. As is well-known and described in, for example, the Stephenson paper cited above, low-speed operation generally involves the use of current chopping to contain the peak currents, and switching off one of the two switches while leaving the other one on gives an operating mode generally known as "freewheeling".

As is well known in the art, switched reluctance machines can be operated in the generating mode, in which the phase currents are mirror images (in time) of the motoring currents. Such systems are discussed in, for example, "Generating with the switched reluctance motor", Radun, Proceedings of the IEEE 9th Applied Power Electronics Conference, Orlando, Florida, 13-17 Feb 1994, pp 41 - 47, incorporated herein by reference.

Various types of switches are available for use in the converters illustrated in Figures 2 and 3. For example, for ratings up to, say, 600V and 50A, MOSFETs are a common choice. For higher ratings, say up to 1200V and 1000A, IGBTs are usually preferred because they are relatively easy to control. For still higher ratings, it is possible to use IGBTs in parallel or to use a more expensive technology for the switch, e.g. Gallium Nitride (GaN) or Silicon Carbide (SiC).

Given equivalent cooling systems and operating conditions, the torque of the electrical machine is approximately proportional to its active volume. So, for a machine with, say, double the output of a base machine, the designer would expect to approximately double the volume of the active components, for example by increasing the core lengths and stator outside diameter by some 26%. However, the increase in power may not be matched by rating of the switching devices in the power converter, since these are only available in discrete sizes, each with their own voltage and current ratings. The designer therefore gets to a point where, although the machine rating can be increased, there are no commercially available devices which can support the extra power required. The only available solution is to parallel either devices or complete converters, so as to keep the current handled by each device within its rating, as discussed in US5493195 (Heglund).

Figure 4 shows a schematic diagram of switches being provided by two devices in parallel. For clarity, the diodes have been omitted from the drawing. The top switch P comprises two switches P1, P2 in parallel. Similarly, the bottom switch Q comprises two switches Q1, Q2 in parallel. When the top switch and bottom switches are closed, the phase winding 42 is connected to the DC link 26, 27. The current transducer 44 provides a signal indicative of the current being drawn from the supply. Provided that the switches are operated precisely together (i.e. there is no discrepancy in the timing of the firing signals), this arrangement will generally work well, and the currents are shared appropriately between the devices.

Paralleling of IGBTs is relatively straightforward when they can be mounted physically close together, typically on the same heatsink, because, if the devices are identical, the current distributes substantially equally between the devices. However, it is not always possible to mount the devices in the desired position in the power converter.

While this arrangement of paralleled devices may be satisfactory in normal operation, a problem arises when one of the switching devices fails to switch, say, because of a fault in the firing circuit or because the device has gone open circuit. With reference to Figure 4, consider that switch P1 fails to close when composite switches P and Q are closed to apply excitation to the winding 42. The flux, and therefore the current, will ramp up in the usual way and the current, as detected by the current transducer 44, will be completely normal. However, switch P2 is carrying twice the normal current and is at risk of exceeding its rated current and failing. When P2 fails, the initial fault has propagated from P1 to P2 and the corresponding phase leg is now unserviceable, even though the current transducer 44 has not detected anything unusual prior to P2 failing.

This problem has been addressed in the field of inverter-fed induction and synchronous machines. The general approach has been to isolate the individual inverters and allow them to operate independently, each inverter module having its own current feedback and its own control system. Additionally, each phase of each inverter has an inductor placed in its output line, upstream of a common connection to the electrical machine. These inductors present a relatively high impedance at the switching frequency of the inverters but a relatively low impedance at the much lower frequency of the synthesised sine wave. Although the current demand to the inverters is common, the presence of the inductors isolates the inverters at their switching frequency and allows the individual current transducers in each inverter to maintain control of the current contribution from that inverter. These techniques are discussed in, e.g., "Parallel Operation of Voltage Source Inverters with Minimal Intermodule Reactors", Shi and Venkataramanan, IEEE Industry Applications Society Conference, 03-07 October 2004, Seattle, pp156 - 162.

While the solution described above for inverter-fed machines is effective for this type of machine, albeit at the considerable expense of providing a complete control system and three additional inductors for each module, it cannot be used for unipolar-fed machines, e.g., for switched reluctance machines, because there is no high-frequency alternating component in the output of the converter. The isolation technique would therefore be ineffective.

There is therefore a need for an improved control system for a switched reluctance machine which is fed via parallel sets of switches.

The present invention is defined in the accompanying independent claims. Preferred features of the invention are recited in the claims respectively dependent thereon.

Described embodiments provide a switched reluctance drive comprising a switched reluctance machine with a phase winding. The drive includes a plurality of pairs of switches. Each pair is arranged to connect the phase winding to a unidirectional power supply. One switch of each pair is arranged to connect one end of the phase winding to a positive terminal of the power supply and the other switch of each pair is arranged to connect the other end of the phase winding to a negative terminal of the power supply. A respective current sensing arrangement is coupled between each pair of switches and the phase winding and comprises one or more current transducers. A control system is connected to the current sensing arrangements and configured to use signals from the current sensing arrangements to monitor current sharing between the switches of the plurality of pairs of switches.

Advantageously, by being able to monitor current sharing between switches using the claimed configuration of current sensing arrangements, operation of the drive within safe parameters can be ensured and switch faults that would not otherwise be apparent from a conventional current measurement can be detected. This enables safe and efficient use of switch modules to achieve the inherent advantages described above. It will, of course, be understood that the control system typically also performs other functions such as controlling the direction, speed and/or torque of the drive by setting the firing angles for the switches controlling the energisation of one or more phases of the drive.

In some embodiments, a first one of the pairs of switches is arranged in a first module and a second one of the pairs of switches is arranged in a second module. The modules are removable from the switched reluctance drive independently of each other, thereby enabling one of the modules to be readily serviced or replaced without interfering with the other module or modules. The modules may be provided with respective enclosures so that each module is enclosed separately and independently from the other module or modules.

Providing the power converter in modular form enables many different rating requirements to be fulfilled by a standard product. For example, a manufacturer who had a standard design for a power converter module rated at 500kW might wish to offer drives rated at 1MW or 1.5MW by simply paralleling two or three modules and connecting that arrangement to an appropriately sized machine. Apart from manufacturing convenience, this would also provide an operational advantage in that, in the event of a fault in one module, the expectation is that the failed module would be removed and replaced, without having to replace the entire converter.

In some embodiments, the control system is configured to evaluate a magnitude of the combined currents through the switches of the pair of switches for each of the pairs of switches (i.e. the sum of the currents of the two switches in a pair). The evaluated magnitudes are used by the control system in a comparison to determine if failure has occurred in one of the switches. If so, the control system is arranged to generate a fault signal. The fault signal may indicate the pair (or module) containing the switch that has failed. In some embodiments, the control system is further configured to evaluate an average value of the respective magnitudes and the comparison includes comparing a function of the respective magnitudes and the average value to a threshold value. The function may include taking a respective difference between the average value and each of the magnitudes. The threshold value may be determined by dividing the value of the current for which the phase in question has been rated by the number of pairs of switches.

In some embodiments, the current sensing arrangement comprises a respective current transducer for each switch. In other embodiments, the current sensing arrangement for each pair of switches comprises a current transducer arranged to sense the current flowing in both the respective current paths between the phase winding and the power supply through the switches for the pair of switches.

In some embodiments, the current sensing arrangement comprises a respective current transducer for each switch to generate a current signal representative of current through each respective switch and the control system is arranged to compare one or more of the current signals against a threshold value. These embodiments provide a simple approach to preventing overcurrent in any one switch of a modular switch arrangement as described above.

Further described embodiments provide switching circuit modules corresponding to the above embodiments, a switching circuit for a switched reluctance drive using such modules, the drive comprising a switched reluctance machine with a phase winding and a unidirectional power supply; and a method of monitoring current sharing between switches in a switched reluctance drive having a modular arrangement of switches.

These and other aspects and advantages of the invention will become apparent upon reading the following detailed description of exemplary embodiments of the invention and upon reference to the accompanying drawings, in which:

Figure 1 is a schematic drawing of a prior art switched reluctance drive;
Figure 2 is a prior art excitation circuit for one phase of the switched reluctance machine of Figure 1;
Figure 3 is a prior art 3-phase converter circuit for the switched reluctance machine of Figure 1;
Figure 4 is a simplified schematic of a power switching circuit using two paralleled switches;
Figure 5 shows a circuit diagram relating to one embodiment;
Figure 6 shows a simplified schematic of Figure 5;
Figure 7 is a flow diagram of a method of processing current measurements;
Figure 8 shows a circuit diagram relating to a further embodiment; and
Figure 9 shows a circuit diagram relating to a yet further embodiment using three modules to supply the phase winding.

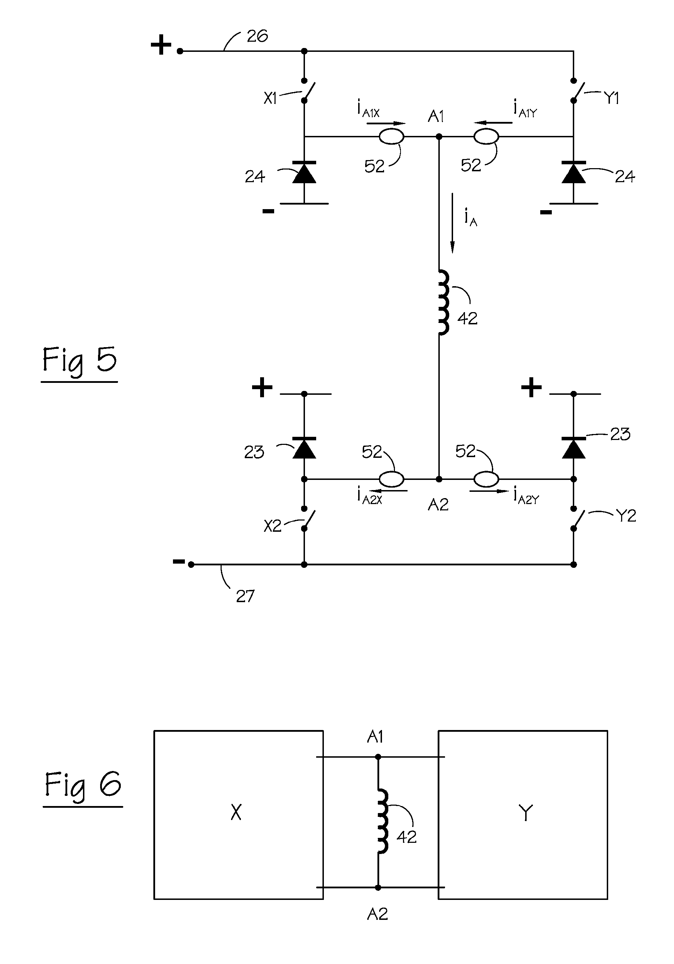

Figure 5 shows a circuit diagram describing one embodiment of the invention for one phase of a drive system which may have other, substantially identical phases, which have been omitted from the description and drawings for clarity. The phase winding 42 of the electrical machine carries a current $i_A$ and is connected at nodes A1 and A2 to four current transducers 52. The four transducers are preferably identical in performance, though suitable scaling factors could be selectively applied to their outputs if these outputs were not substantially equal for a given input. The "top" switch for the winding, i.e. the means of connecting node A1 to the positive rail 26 of the DC link, is provided by two switches X1 and Y1, each connected to the negative rail 27 of the DC link by their respective diodes 24. Similarly, the "bottom" switch for the winding, i.e. the means of connecting node A2 to the negative rail 27 of the DC link, is provided by two switches X2 and Y2, each connected to the positive rail 26 of the DC link by their respective diodes 23. Figure 6 shows a schematic which indicates how these devices could be packaged into two modules. In practice, there will be auxiliary circuits associated with each of the switches X1, Y1, X2, Y2, for interfacing between the control system and each switch, but these are understood to be completely conventional and have been omitted for clarity.

It will be understood by those skilled in the art that, despite there being two modules of power electronics connected in parallel to supply the phase winding, there is only one control system which, as shown in Figure 1, processes the user demands and supplies the appropriate firing signals to the switches.

In some embodiments, the modules are provided as separate units, so that they can be separately installed and removed from the drive to service or replace individual modules. The modules may each be provided in their own separate enclosure, in some embodiments, or may be provided without a separate enclosure to be housed in an enclosure housing one or more other modules and/or other components of the drive.

The current transducers indicate the magnitude of the currents flowing to and from the nodes A1 and A2, i.e., they provide signals representing the currents $i_{A1X}$, $i_{A1Y}$, $i_{A2X}$ and $i_{A2Y}$. Using these signals, a method of detecting current unbalance between the switches can be developed, as follows. The current in the phase winding can be determined by summing the outputs of the two current transducers connected to each node, taking care to observe the directions of the currents and hence the polarities of the output signals. To allow for manufacturing tolerances in the transducers, the sums of the currents at the two nodes may be averaged. Each individual transducer output may now be compared to the average phase winding current and, if not substantially equal to one half of the phase winding current, it can be deduced that the switches are not sharing the current correctly and the drive can be shut down.

A preferred approach which uses fewer analogue comparators is as follows. Define the following quantities:

$$i_{AX} = i_{A1X} + i_{A2X} \tag{1}$$

$$i_{AY} = i_{A1Y} + i_{A2Y} \tag{2}$$

These notional currents can be considered as the contributions from the modules X and Y to Phase A. For the avoidance of doubt, the current $i_{AX}$ and $i_{AY}$ are referred to as "notional", as they are introduced here for convenience of calculation and do not correspond to individual current flowing in any one conductor of the circuit. Also define:

$$i_{Amean} = (i_{AX} + i_{AY}) / 2 \tag{3}$$

Substituting (1) and (2) into (3) gives:

$$i_{Amean} = (i_{A1X} + i_{A2X} + i_{A1Y} + i_{A2Y}) / 2$$
$$= (i_{A1X} + i_{A1Y} + i_{A2X} + i_{A2Y}) / 2$$

By inspection of Figure 5, nodes A1 and A2 being in the same current path and each node combining the currents to/from X and Y,

$$i_{Amean} = (i_A + i_A) / 2$$
$$= i_A \tag{4}$$

Thus $i_{Amean}$ corresponds to the phase current $i_A$. This signal is available to the control system to be used in other areas of control, e.g. to be used as a measure of the torque being produced by the machine. Under balanced conditions with each switch carrying the same current, $i_{AX} = i_{AY} = i_A$.

Consider an unbalanced condition, for example, where switch X1 fails to close, so $i_{A1X}$ is zero. The phase winding current $i_A$ and the current $i_{Amean}$ are unchanged, because the current is dictated by the flux, which in turn is produced by the applied voltage from the DC link, which is unchanged. However, from Equations (1) and (2),

$$i_{AX} = i_{A1X} + i_{A2X} = 0 + i_A/2 = i_A/2$$

$$i_{AY} = i_{A1Y} + i_{A2Y} = i_A + i_A/2 = 3i_A/2$$

This can be checked by Equation (3):

$$i_{Amean} = (i_{AX} + i_{AY}) / 2$$
$$= (i_A/2 + 3i_A/2) / 2$$
$$= (2i_A)/2$$
$$= i_A$$

One method of detecting current imbalance due to an open circuit device is to determine the maximum peak current expected in the phase winding during normal operation and set a threshold for each of the transducers 52 such that if they detect a current greater than half the peak current expected, the control system signals a fault and suspends firing of the switches so as to prevent further damage. Alternatively, the threshold for the current measurement by each current transducer can be set to the rated current of the respective switch, in some embodiments. This method has limitations, because it fails to take account of the fact that the safe operation for a switch depends not only on the peak current but also on the form factor of the waveform, i.e. if the waveform has a high duty cycle (e.g. close to constant current, as would be experienced during a stalled operation or during a prolonged start) the allowable current is lower than it would be for operation in single-pulse mode. The setting of the threshold value is therefore a difficult design choice.

A better method of control is to consider the difference between the mean current and the individual contributions from each module because the difference is less sensitive to minor current imbalances and to measurement noise:

$$i_{Amean} - i_{AX} = i_A - i_A/2 = i_A/2 \qquad (5)$$

$$i_{Amean} - i_{AY} = i_A - 3i_A/2 = -i_A/2 \qquad (6)$$

If the maximum rated current for the phase winding is $i_{Ar}$, it follows that, provided

$$i_{Amean} - i_{AX} \leq i_{Ar}/2 \qquad (7)$$

$$i_{Amean} - i_{AY} \leq i_{Ar}/2 \qquad (8)$$

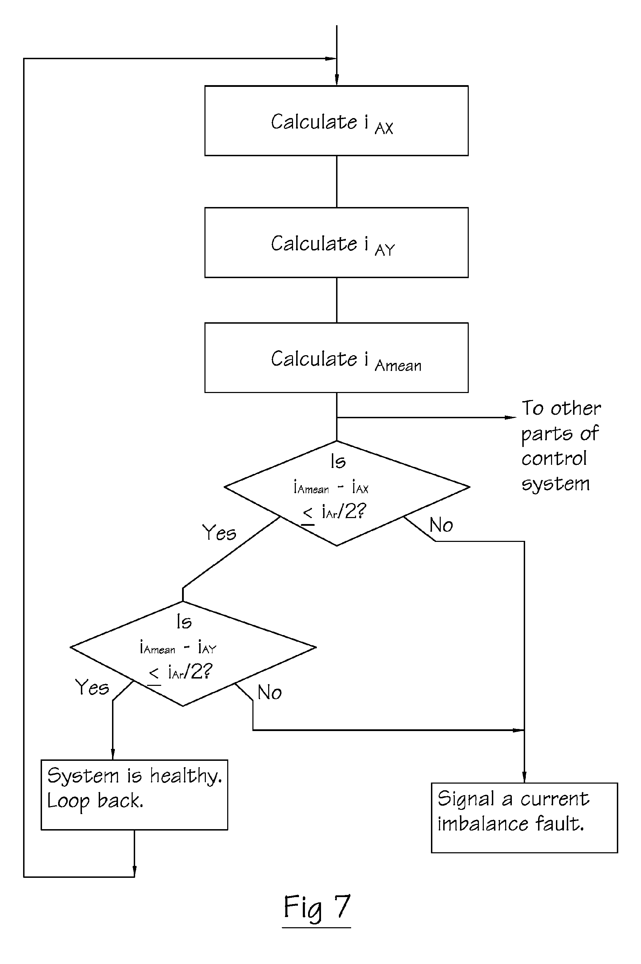

then the devices are operating within their specified limits. In other words, a fault condition will be detected if the magnitude of the current difference between two switches is greater than the maximum rated phase current, indicating that one of those two switches is faulty. In the event of such an occurrence, the control system can be programmed either to shut down the drive or to reduce the output of the drive so as to prevent the fault propagating into other modules from the faulty switch. For example, the output of the machine could be reduced by half so that the healthy switch is operating inside its rating. Figure 7 shows a flow diagram illustrating steps appropriate to implement this method and which can be used as the basis for a computer program which implement the method when executed on a processor. The computer program can be stored on an suitable, tangible, machine readable medium or media, such as in an EPROM or ASIC, or any digital storage device.

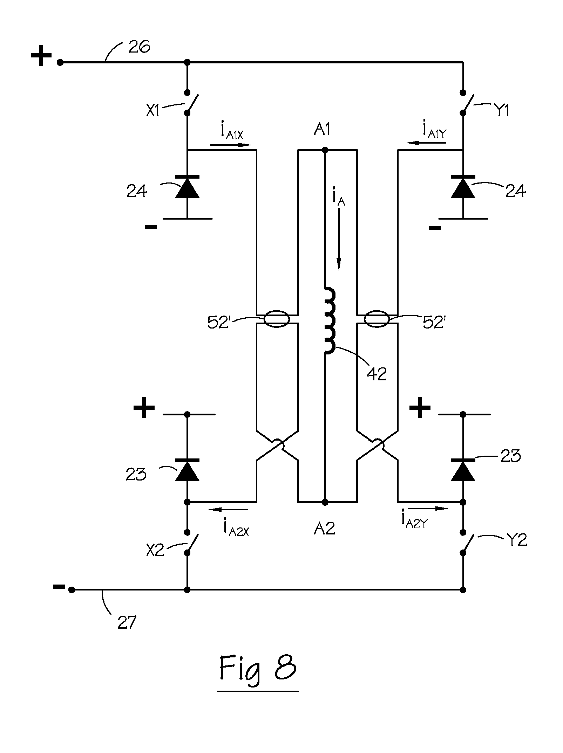

A further embodiment will now be described. By inspection of Equations (1) and (2), it will be noted that only the sums of $i_{A1X} + i_{A2X}$ and of $i_{A1Y} + i_{A2Y}$ are required to implement the method. These quantities can be produced from four transducers as shown above or could be supplied by two transducers each summing the appropriate currents. This is illustrated in Figure 8, where the number of current transducers 52 has been reduced from four to two transducers 52'. The connection between the switch Y1 and node A1 and the connection between the switch Y2 and the node A2 are routed past the respective current transducer 52' so that current flows in the same direction through or past the current transducer, depending on the type of transducer used. The respective connection from switches X1 and X2 are arranged analogously. Therefore, each transducer 52' sums currents of the correct polarity. This arrangement has the advantage that it only requires one transducer per module, though it may be physically more difficult to arrange the cables for the current to pass through the transducers in the correct directions. For the situation where two modules are required to operate in parallel, it is a cost-effective arrangement.

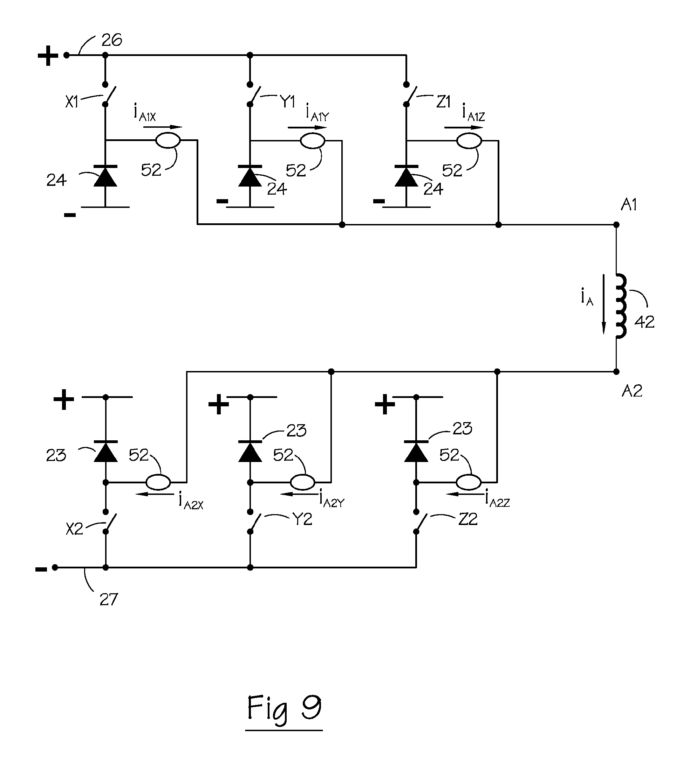

The exemplary systems described above have used two modules of power electronics to energise the electrical machine. However, the invention is not limited to such an arrangement. Any number of modules can, in principle, be used, though the cost benefit may diminish as the number of parallel-connected modules rises. Figure 9 illustrates the connection diagram of a further embodiment in which three modules are interconnected to supply a single machine winding.

By inspection of Figure 9 and extension of Equations (1) to (3):

$$i_{AZ} = i_{A1Z} + i_{A2Z} \qquad (9)$$

$$i_{Amean} = (i_{AX} + i_{AY} + i_{AZ})/3 = 2i_A/3 \qquad (10)$$

The notional currents $i_{AX}$, $i_{AY}$ and $i_{AZ}$ can be compared to $i_{Amean}$ as before and it can be shown that if

$$i_{Amean} - i_{AX} \leq i_{Ar}/3 \qquad (11)$$

$$i_{Amean} - i_{AY} \leq i_{Ar}/3 \qquad (12)$$

$$i_{Amean} - i_{AZ} \leq i_{Ar}/3 \qquad (13)$$

then the devices are operating within their specified limits.

The flow chart of Figure 7 can be extended, mutatis mutandis, to cover this arrangement of three modules, or arrangements with more than three modules, as will be understood by those skilled in the art. As is apparent from the above discussion and can readily be proved mathematically, the threshold value can be generalised for the general case of n pairs of switches to $i_{Ar} / n$.

An alternative method to monitor current sharing used in some embodiments is to compare $i_{AX}$ and $i_{AY}$ and to raise a fault condition if their values differ by more than a threshold amount, for example more than 30% of the larger of the two values. Generalising this to more than two pairs of switches, the summed currents from each pair of switches can be compared to each other to determine if current is not shared appropriately and a fault condition is to be raised. In the case of three pairs, for example, $i_{AX}$ could be compared to $(i_{AY} + i_{AZ}) / 2$ (and similarly for $i_{AY}$ and $i_{AZ}$ if desired) and a fault condition raised if their values differ by more than a threshold amount, for example more than 30% of the larger of the two values.

Embodiments of the invention include a computer program product stored on a computer readable medium to be executed by the system controller. The medium may be solid state memory or other storage device enabling processing for controlling the machine to implement the control regime according to the disclosed embodiments. The controller may be a general purpose processor or other computer means running under the command of the program. Equally well, the embodiments can use a dedicated device, such as an application specific integrated circuit (ASIC).

ANNEX

The following method embodiments are disclosed:

1. A method for monitoring current sharing between switches in a switched reluctance drive, wherein the switched reluctance drive comprises a switched reluctance machine having a phase with a phase winding and a plurality of pairs of switches, each pair being arranged to connect the phase winding to a unidirectional power supply, wherein one switch of each pair is arranged to connect one end of the phase winding to a positive terminal of the power supply and the other switch of each pair is arranged to connect the other end of the phase winding to a negative terminal of the power supply, the method comprising:

    sensing current through each pair of switches;
    monitoring current sharing between the switches of the plurality of pairs of switches using the sensed currents.

2. A method as claimed in item 1, wherein monitoring current sharing comprises:

    evaluating for each pair of the plurality of pairs of switches a magnitude of the combined currents through the switches of the pair of switches;
using the evaluated magnitudes in a comparison to determine if a failure has occurred in one of the switches; and
generating a fault signal if the comparison indicates that a fault has occurred in one of the switches.

3. A method as claimed in item 2, wherein monitoring current sharing comprises evaluating an average value of the respective magnitudes and wherein the comparison includes comparing, for each pair of switches, a function of the magnitude and the average value to a threshold value.

4. A method as claimed in item 3, wherein the function includes taking the difference between the magnitude and the average value.

5. A method as claimed in item 3 or item 4, wherein the threshold value is the value of the current for which the phase has been rated divided by the number of pairs of switches in the plurality of pairs of switches.

6. A method as claimed in any one of items 2 to 5, wherein the fault signal indicates which pair of the plurality of pairs of switches contains the switch that has failed.

7. A method as claimed in claim 1, the method comprising sensing a current through each switch and comparing each sensed current to a threshold value.

The following switch circuit embodiments are disclosed:

A switching circuit for a switched reluctance drive comprising a switched reluctance machine with a phase winding and a unidirectional power supply, the switching circuit comprising a plurality of modules as set out in claims 12 to 14 in the claims appended below.

The skilled person will appreciate that variation of the disclosed arrangements are possible without departing from the invention. Accordingly, the above description of several embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A switched reluctance drive comprising:

   a switched reluctance machine having a phase with a phase winding;
   a plurality of pairs of switches, each pair being arranged to connect the phase winding to a unidirectional power supply, wherein one switch of each pair is arranged to connect one end of the phase winding to a positive terminal of the power supply and the other switch of each pair is arranged to connect the other end of the phase winding to a negative terminal of the power supply;
   a respective current sensing arrangement coupled between each pair of switches and the phase winding, each current sensing arrangement comprising one or more current transducers;
   a control system connected to the current sensing arrangements and configured to use signals from the current sensing arrangements to monitor current sharing between the switches of the plurality of pairs of switches.

2. A switched reluctance drive as claimed in claim 1, wherein a first module comprises one of the pairs of switches and a second module comprises a second one of the pairs of switches, the first module being removable from the switched reluctance drive as a unit independently of the second module, thereby enabling the first module to be replaced independently of the second module.

3. A switched reluctance drive as claimed in claim 1, wherein the first module is enclosed in first enclosure and the second module is enclosed in a second enclosure separate from the first enclosure.

4. A switched reluctance drive as claimed in any preceding claim, wherein the control system is configured to evaluate for each pair of the plurality of pairs of switches a magnitude of the combined currents through the switches of the pair of switches; to use the evaluated magnitudes in a comparison to determine if a failure has occurred in one of the switches; and to generate a fault signal if the comparison indicates that a failure has occurred in one of the switches.

5. A switched reluctance drive as claimed in any one of claims 1 to 4, wherein the control system is configured to evaluate for each pair of the plurality of pairs of switches a magnitude of the combined currents through the switches of the pair, to evaluate an average value of the respective magnitudes; to compare a function of the respective magnitudes and the average value to a threshold value; and to generate a fault signal if the comparison indicates that a failure has occurred in one of the switches.

6. A switched reluctance drive as claimed in claim 5, wherein the control system is configured to compare a respective difference between the average value and each of one or more of the magnitudes with the threshold value.

7. A switched reluctance drive as claimed in claim 5 or 6, wherein the threshold value is the value of the current for which the phase has been rated divided by the number of pairs of switches in the plurality of pairs of switches.

8. A switched reluctance drive as claimed in any one of claims 4 to 7, wherein the fault signal indicates which pair of the plurality of pairs of switches contains the switch that has failed.

9. A switched reluctance drive as claimed in any preceding claim, wherein each of the switches of each pair of switches is connected between the phase winding and the power supply by a respective current path and the current sensing arrangement comprises a current transducer arranged to sense the current flowing in both of the respective current paths, wherein the current path is arranged such that current flows in the same direction past the current transducer in both current paths.

10. A switched reluctance drive as claimed in any one of claims 1 to 7, the current sensing arrangement comprising a respective current transducer for each switch.

11. A switched reluctance drive as claimed in any one of claims 1 to 3, the current sensing arrangement comprising a respective current transducer for each switch to generate a current signal representative of current through each respective switch and the control system being arranged to compare one or more of the current signals against a threshold value.

12. A switching circuit module for a switched reluctance drive comprising a switched reluctance machine with a phase winding, the switching circuit module comprising:

a pair of switches, arranged to connect the phase winding to a unidirectional power supply, wherein a first switch of the pair is arranged to connect one end of the phase winding to a positive terminal of the power supply and a second switch of the pair is arranged to connect the other end of the phase winding to a negative terminal of the power supply;
a first current transducer arranged to sense current through the first switch at a point between the positive terminal of the power supply and the phase winding; and
a second current transducer arranged to sense current through the second switch at a point between the negative terminal of the power supply and the phase winding.

13. A switching circuit module as claimed in claim 12, wherein the first current transducer and the second current transducer are different, separate current transducers.

14. A switching circuit module as claimed in claim 12, wherein the first current transducer and the second current transducer are the same current transducer and a first current path between the phase winding and the positive terminal through the first switch and a second current path between the phase winding and the negative terminal through the second switch are disposed relative to the current transducer so that current flows past the current transducer in the same direction in the first and second current paths.

15. A method for monitoring current sharing between switches in a switched reluctance drive, wherein the switched reluctance drive comprises a switched reluctance machine having a phase with a phase winding and a plurality of pairs of switches, each pair being arranged to connect the phase winding to a unidirectional power supply, wherein one switch of each pair is arranged to connect one end of the phase winding to a positive terminal of the power supply and the other switch of each pair is arranged to connect the other end of the phase winding to a negative terminal of the power supply, the method comprising:

sensing current through each pair of switches;
monitoring current sharing between the switches of the plurality of pairs of switches using the sensed currents.

Fig 1
Prior Art

Fig 2
Prior Art

Fig 3

Prior Art

Fig 4

Fig 5

Fig 6

Calculate i $_{AX}$

Calculate i $_{AY}$

Calculate i $_{Amean}$

To other
parts of
control
system

Is
i$_{Amean}$ - i$_{AX}$
$\leq$ i$_{Ar}$/2?

Yes

No

Is
i$_{Amean}$ - i$_{AY}$
$\leq$ i$_{Ar}$/2?

Yes

No

System is healthy.
Loop back.

Signal a current
imbalance fault.

Fig 7

Fig 8

Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5493195 A, Heglund

**Non-patent literature cited in the description**

- **TJE MILLER.** Electronic Control of Switched Reluctance Machines. *Newnes,* 2001
- **STEPHENSON ; BLAKE.** The characteristics, design and application of switched reluctance motors and drives. *PCIM'93,* 21 June 1993

- **RADUN.** Generating with the switched reluctance motor. *Proceedings of the IEEE 9th Applied Power Electronics Conference,* 13 February 1994, 41-47
- **SHI ; VENKATARAMANAN.** Parallel Operation of Voltage Source Inverters with Minimal Intermodule Reactors. *IEEE Industry Applications Society Conference,* 03 October 2004, 156-162